# EUROPEAN PATENT APPLICATION

(11) **EP 4 063 470 A1**
(43) Date of publication of application: **28.09.2022**
(21) Application number: 21164488.5
(22) Date of filing: 24.03.2021
(51) Int. Cl.: C10J 3/78, B01J 3/00

(54) **PROCESS FOR CATALYTIC SUPERCRITICAL WATER GASIFICATION EQUIPPED WITH SEVERAL SULFUR REMOVAL STEPS**

(71) Applicant: PAUL SCHERRER INSTITUT, 5232 Villigen PSI (CH)
(72) Inventor: BAUDOUIN, David, 5223 Riniken (CH); VOGEL, Frédéric, 5018 Erlinsbach (CH); XIANG, Hang, Thalwil 8800 (CH)
(74) Representative: Fischer, Michael

(57) **Abstract**

It is the objective of the present invention to provide a process for the catalytic supercritical water gasification of wet biomass and/or wastes wherein the process show a high efficiency and a long durability of the catalytic components used in the gasification reaction due to a low or negligible sulfur content in the process stream entering the gasification reactor.

This objective is achieved according to the present invention by a process for the catalytic supercritical water gasification of wet biomass and/or wastes, comprising the steps of:
a) pressurizing and heating a pumpable water-based slurry of the biomass and/or wastes and optionally other additives to supercritical water conditions, T> 374°C, P>22.1 MPa, and removing phase separated salts and/or solid particles via a brine extraction line in order to produce a desalinated process stream;
b) bringing the desalinated process stream under supercritical water conditions, T> 374°C, P>22.1 MPa, into contact with a first sulfur trap; said first sulfur trap being equipped with a first trap material comprising metal oxide based material in order to reduce the sulfide content of the desalinated process stream;
c) bringing the desalinated process stream under supercritical water conditions, T> 374°C, P>22.1 MPa, into contact with a second sulfur trap; said second sulfur trap being equipped with a second trap material comprising material based on metal chalcogenide (MX_{y}, X=O,S,Se,Te) and/or on hybrid carbon metal chalcogenide (MXy:C, X= O, S, Se, Te) and/or on hybrid metal-carbon materials (M:C) in order to reduce the concentration of the organosulfur compounds of the desalinated process stream; wherein step c) either follows step b) or is executed prior to step b);
d) bringing the desalinated and desulphurized process stream into a hydrothermal gasification catalytic reactor in order to generate a methane-containing process stream;
e) cooling the methane-containing process gas stream to a temperature above the temperature for methane hydrate formation; and
f) depressurizing the cooled methane-containing process gas stream and separating the gaseous phase from the liquid phase.

## Description

The present invention relates to a process for catalytic supercritical water gasification.

Catalytic supercritical water gasification (cSCWG) of wet biomass (also known as catalytic hydrothermal gasification (cHTG) is a promising way to produce bio-methane with high energy efficiency. Ru/C catalyst is generally used to produce methane-rich biogas, which is protected from poisoning by reduced sulphur species present in biomass by an upstream sulphur-trap bed (S-trap). Commercially available S-traps have however not been developed specifically for SCW conditions, that are known for their harshness towards porous materials. In parallel, very little is known on the nature and chemistry of biomass-based organosulfur compounds formed under SCWG conditions and the ability of commercial S-traps to desulfurize these compounds.

It is important to protect the expensive ruthenium-based gasification catalyst from sulfur, which will poison the active phase and reduce the lifetime of the catalyst bed.

The current protection of a cSCWG catalyst against sulfur is typically two-fold:
a) Salt separation to remove the majority of inorganic compounds including sulfates and sulfites, and a part of sulfides present, producing the desalinated stream
b) Single S-trap placed upstream the catalyst and downstream the salt separation unit to remove reduced inorganic sulfur compounds, i.e. hydrogen sulfides.

In catalytic hydrothermal gasification process, a part of the sulfur contained in wet biomass is removed by a step upstream the catalyst making use of the low solubility of salts in (near) supercritical water (SCW) (Point a). Examples of salt separator are disclosed in US 8.241,605 B2 and US 8, 877, 098 B2, in which a subcritical hydrothermal process is used to remove sulfates from biomass before cHTG. Salts are added to improve sulfate separation (calcium ascorbate) and allows to go below 20 ppm of sulfate downstream.

Downstream that step, the desalinated wet biomass feedstock still comprises soluble, reduced sulfur compounds that are a threat to the gasification catalyst. Several groups around the world have been using safeguard beds to remove these compounds before they can reach the catalyst. Several examples are:
i) commercial ZnO-based trap which is composed of 90% ZnO, the other 10% being Al/Ca-based inorganic binder;
ii) a sulfur scrubber trap based on Raney Nickel or nickel nanoparticles supported on alumina;
iii) several traps based on Ni (G1-80 form from BASF or as alkali-leached nickel aluminum alloy (Raney nickel) where soluble, reduced sulfur contaminants present in the desalinated biomass stream are captured in an "adsorbent bed" by reaction with a "metal or a metal oxide".

Former studies proved the efficiency towards sulfur absorption of the commercial sulfur trap used at the moment on the continuous gasification unit. Indeed, the trap proved to absorb hydrogen sulfide efficiently while maintaining its physical integrity. This allowed to significantly enhance the life expectation of the Ru/C catalyst downstream, a prerequisite for long-term cHTG operation. Unfortunately, this material has shown a very low stability of its porous network, losing 90% and 83% of its surface area and pore volume, respectively, after 24 h under supercritical water conditions.

However, little is known on the performance of the sulfur trap used under catalytic hydrothermal gasification. Several parameters are of importance:
- Trap efficiency, i.e. the concentration of sulfur downstream the trap (this strongly depends on the nature of the sulfur compounds) before a breakthrough,
- Trap capacity, i.e. the total quantity of sulfur the trap can absorb before a breakthrough,
- Trap stability for long-term operation.

Several parameters will influence the trap's performance, among others the presence of other organic & inorganic compounds, the nature of the sulfur compounds, the temperature and pressure. These parameters can lead to the formation of coke, the material's fouling, coarsening/sintering or dissolution of its constituents.

Subcritical treatment for the removal of sulfur from heavy hydrocarbons have been reported in EP 2 616 525 B1 and US 5,496,464 B2. In this process, desulfurization catalysts were used under subcritical conditions, not specifically to trap sulfur upstream a gasification catalyst, but merely to remove sulfur from the organic fraction. Recent research effort have been placed in upgrading and desulfurizing heavy oils by supercritical water [J. of Supercritical Fluids 96 (2015) 114-123) + "The role of catalyst in supercritical water desulfurization" (Applied Catalysis B: Environmental 147 (2014) 144- 155)] by a process called "Catalytic-Supercritical water upgrade (c-SCWU)". In this work, pure MoO3, ZnO and MoS2 (unsupported) were used as catalysts for the desulfurization of heavy crudes.

It is therefore the objective of the present invention to provide a process for the catalytic supercritical water gasification of wet biomass and/or wastes wherein the process show a high efficiency and a long durability of the catalytic components used in the gasification reaction due to a low or negligible sulfur content in the process stream entering the catalytic gasification reactor.

This objective is achieved according to the present invention by a process for the catalytic supercritical water gasification of wet biomass and/or wastes, comprising the steps of:
a) pressurizing and heating a pumpable water-based slurry of the biomass and/or wastes and optionally other additives to supercritical water conditions, T> 374°C, P>22.1 MPa, and removing phase separated salts and/or solid particles via a brine extraction line in order to produce a desalinated process stream;
b) bringing the desalinated process stream under supercritical water conditions, T> 374°C, P>22.1 MPa, into contact with a first sulfur trap; said first sulfur trap being equipped with a first trap material comprising metal oxide based material in order to reduce the sulfides (S²⁻, HS⁻, H₂S) content of the desalinated process stream;
c) bringing the desalinated process stream under supercritical water conditions, T> 374°C, P>22.1 MPa, into contact with a second sulfur trap; said second sulfur trap being equipped with a second trap material comprising material based on metal chalcogenide (MX_{y}, X=O,S,Se,Te) and/or on hybrid carbon metal chalcogenide (MXy:C, X= O,S,Se,Te) and/or on hybrid metal-carbon materials (M:C) in order to reduce the concentration of the organosulfur compounds of the desalinated process stream; wherein step c) either follows step b) or is executed prior to step b);
d) bringing the desalinated and desulphurized process stream into a hydrothermal gasification catalytic reactor in order to generate a methane-containing process stream;
e) cooling the methane-containing process gas stream to a temperature above the temperature for methane hydrate formation; and
f) depressurizing the cooled methane-containing process gas stream and separating the gaseous phase from the liquid phase.

This process is highly efficient and guarantees a long life time and selectivity of the catalytic material used in the hydrothermal gasification catalytic reactor due to the absence of relevant sulfur traces after passing the process stream through a series of sulfur traps, such as the first and second sulfur trap. In particular, the use of the MOx/C and M/C as an ab/adsorbent composition for the specific removal of reduced sulfur species from the desalinated stream in this hydrothermal process of biomass or fossil crude gasification, wherein the first and/or second trap material can be bifunctional in terms of its functionality as a desulfurization catalyst and a sulfur ad/absorbent. Carbon-based materials are now identified as some of the most stable porous material under SCW conditions, and therefore they are very suitable S-trap materials. GC-SCD results indicated that methylthiol, dialkyldisulfide and alkylthiophenes are the most common compounds present after spirulina algae in a test trial was exposed to supercritical water conditions. MnO&CuO- and CuO&MoO-based materials showed the highest rate for organic S-compounds decomposition, with a decrease of volatile organosulfur compounds by 73 and 85% respectively, while ZnO-based materials had very little impact. These results pave the way for the provision of performant sulfur-traps specific to catalytic SCWG conditions.

In a preferred embodiment of the present invention, the first sulfur trap and/or the second sulfur trap can be realized by injection of the respective trap materials into the step of pressurizing and heating a pumpable water-based slurry of the biomass and/or wastes thereby removing sulfur content via the brine extraction line.

Preferably, said additive can be a metal or metal oxide with affinity for reduced sulfur in the ionic or powder form to allow reduced sulfur removal in the salt separation. This feature also allows considering the addition of the additive as an option to replace solid sulfur traps.

Accordingly, the first sulfur trap and/or the second sulfur trap can be realized by injection of the respective trap materials in the step of pressurizing and heating a pumpable water-based slurry of the biomass and/or wastes thereby removing sulfur content via the brine extraction line.

Of course, if it is considered to be reasonable, at least a third sulfur trap can be provided comprising third trap material in order to reduce the sulfide content and/or to reduce the concentration of the organosulfur compounds of the desalinated process stream. As a suitable example, the first trap material can be ZnO-based, the second trap material can be Fe-based and the third trap material can be CuO-based.

Additionally or alternatively, the first and the second trap material can be mixed in a vessel and/or can be present in different vessels and/or can be present in the hydrothermal gasification catalytic reactor comprising also catalytic material for the gasification.

Preferably, the first and the second trap material are filled in the same vessel in alternating layers.

Typically, the hydrothermal gasification catalytic reactor can be designed as fluidized bed reactor or as catalytically coated plate reactor. The preferred reactor is a fixed-bed reactor setup.

In order to increase the efficiency and the lifetime of the trap materials, an in situ regeneration of the said first trap material and/or said second trap material can be performed by injecting a flow of an oxidant fluid, preferably under mild oxidation conditions.

Suitable trap materials can be designed when the first and/or second trap material are prepared from the carbonization or pyrolysis of a carbon and/or a carbon source mixed with a metal source and/or metal/metal chalcogenide, wherein carbon serves as a binder allowing a high porosity stable under supercritical water conditions. The first and/or the second trap material can thereby be a metal and/or chalcogenide, preferably in the form of oxide or sulfide, even more preferably in its oxide form.

Suitably, at least one metal or metal chalcogenide is a transition metal and lanthanide, preferably Cr, Mn, Fe, Co, Ni, Cu, Zn, Mo, Ru, Rh, Pd, Ag, W, Re, Ir, Pt, Ce, La more preferably Cr, Mn, Fe, Co, Ni, Cu, Zn, Mo, W, Ce and even more preferably Mn, Mo, Fe, Co, Cu, Zn.

In order to provide a sufficient amount of active trap material, the load of the active metal phase in the first and/or the second trap material is greater than 5wt%, preferably more than 30wt%, and even more preferably above 60wt%.

Preferred embodiments of the present invention are hereinafter described in more detail with reference to the attached drawings which depict in:
- Figure 1: schematically a process flow diagram of a catalytic hydrothermal gasification (cHTG) unit;
- Figure 2: schematically a number of production routes for trap materials used for sulfur removal from a feed stream derived from biomass and/or wastes;
- Figure 3: GC-SCD chromatograms of HTL water phases produced from Spirulina exposed to HTG conditions in the presence of various sulfur trap materials; and
- Figure 4: Concentration (mgₛ.L⁻¹) of the main organosulfur compounds identified by GC-SCD on the Spirulina HTL water phases exposed to HTG conditions with various sulfur trap materials.

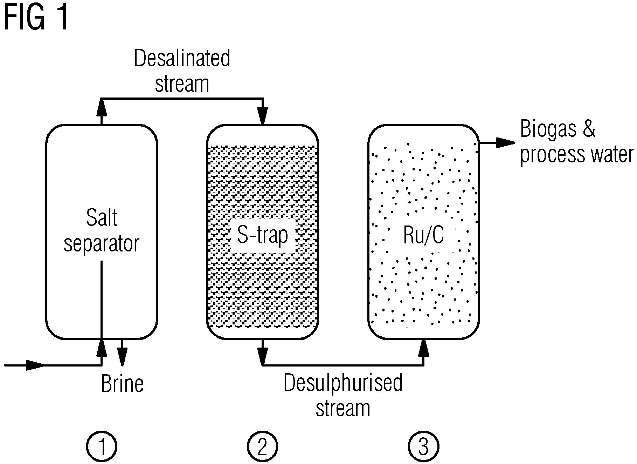

Figure 1 schematically shows a process flow diagram of a catalytic hydrothermal gasification (cHTG) unit as currently in operation at the applicant. Essential to the process efficiency is the protection of the catalytic active material in the gasification reactor (3). In this regard, the desulfurization of the desalinated feed stream is of major interest and an essential feature of the present invention.

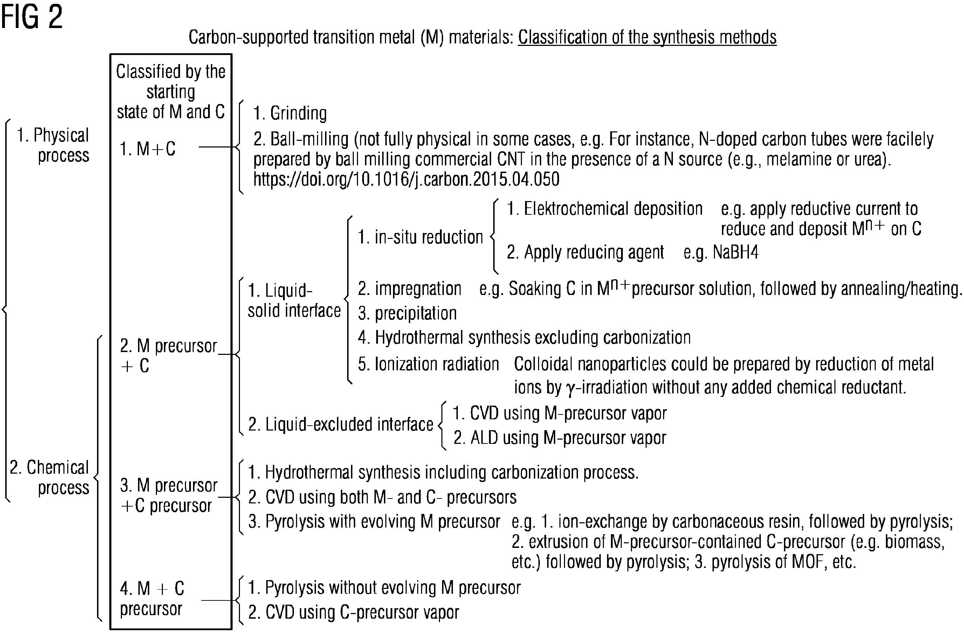

In the sulfur trap 2, the trap materials used are hybrid carbon - metal chalcogenide / Metal material. Figure 2 shows a broad variety of possible production routes for the trap materials used for sulfur removal from a desalinated feed stream derived from biomass and/or wastes gasification. A suitable path is described by the IX-Resin route (2.3.3 example). A porous ion exchange resin (IX resin) is ion exchanged with the metal of interest typically at pH>8. The washed resin is then carbonized (thermal treatment in neutral atmosphere) to yield a carbon - metal /metal oxide material with high porosity.

At PSI, further developments of this class of material has been made to increase metal loading, increase the porosity of the material (upgraded thermal decomposition) and expand the applicability to other metals such as iron, cerium or manganese. Another preferred approach is the carbonization/pyrolysis of a mix of carbon source and metal precursor or metal chalcogenide/metal particles.

### Example of route 2.3.3:

- precipitation of metal salts on cotton followed by pyrolysis

### Example of route 2.4.1/2.3.1:

- Oxide particles are mixed with a solvent containing sugars, dried, extruded and pyrolyzed

In the process for catalytic supercritical water gasification, various trap materials have been used in order to remove sulfur components form the desalinated stream, in particular the sulfides and the organosulfur compounds.

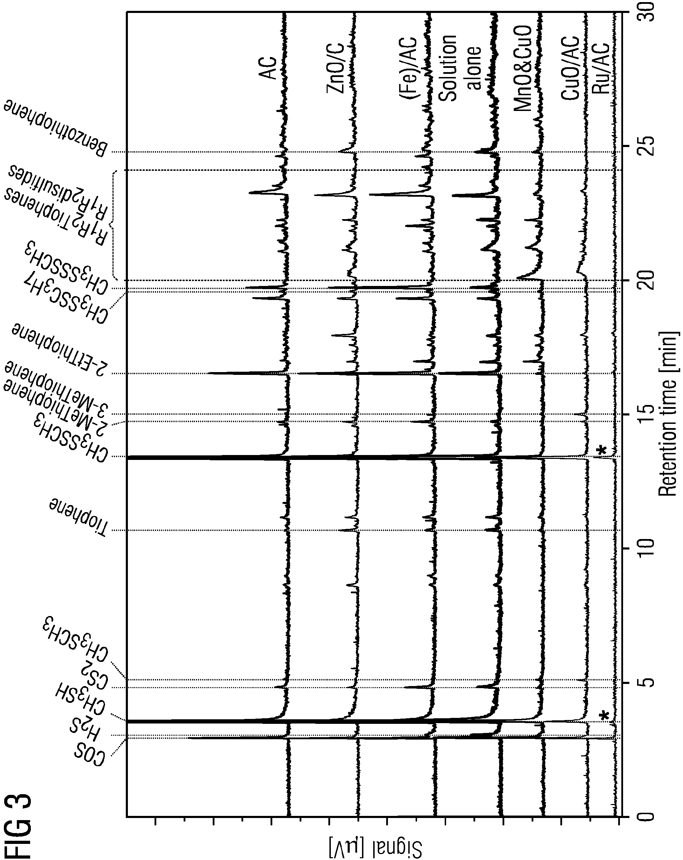

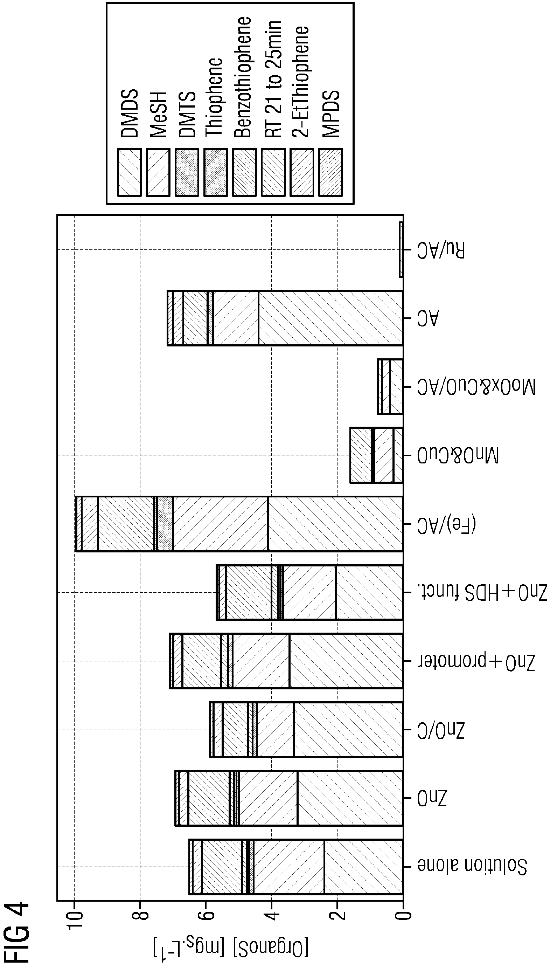

In order to assess the performance of various materials identified as potential sulfur traps, their performance towards organosulfur removal was tested under representative cHTG conditions (450°C, 29 MPa) with spirulina-sourced HTL process water. The solutions produced (output of reactor (3) in Figure 1 after phase separation) were analyzed by GC-SCD and the chromatograms and quantitative results are presented in Figures 3 and 4. Note that for these tests, the molar ratio MOₓ/S (M= Zn, Cu, Mn, Fe) was maintained at about 20.

First, the test performed with the benchmark ruthenium based catalyst (molar Ru/S ratio of ca. 2) showed that no volatile (Bp < 350°C) organosulfur compounds are left after hydrothermal treatment, except for a small amount of COS. An important decrease of the concentration of all organic compounds was observed by GC-FID (not shown) indicating a nearly complete gasification of organic compounds. This indicates that any organosulphur compound reaching the catalytic bed will deactivate the active metal (likely decomposition of organosulfur compounds reaching Ru), outlining the necessity for a sulphur trap efficient towards organosulphur compounds. Interestingly, exposing Spirulina HTL-WP to HTG conditions with activated carbon led to a redistribution of some organosulfur compounds: most importantly less MeSH but more dimethyldisulfide is produced, and peaks likely attributable to various thiophenes are as well impacted. This might be related to the known partial gasification occurring at the surface of activated carbon or could be related to the adsorption of some organo-S compounds on the activated carbon (AC).

As shown in Figure 3 and 4, all ZnO based materials had a very limited impact on organosulfur compounds concentration. Like for the solution exposed to HTG conditions without a sulfur trap, the amount of methylthiol, dimethyldisulfide and trisulfide represent about two thirds of the volatile organosulfur compounds. The binder used or the addition of promoters or even hydrodesulfurisation active phase had limited impact. Interestingly, while the use of these materials decreased the H₂S concentration, 10 to 40% remained after the tests. In the case of iron-doped activated carbon, a 50% increase of total volatile organosulfur is observed, all compounds being more or less affected the same way, except for H₂S. This increase could be explained by:
- Favored cracking of large / non-volatile sulfur containing organic compounds in the presence of the material
- Catalytic impact of the material on the Thermochemical Sulfate Reduction (TSR) reaction known to be favored under these reaction

The MnO&CuO and CuO&MoOₓ/AC led to very low level of volatile organosulfur compounds in the remaining solution, decreasing by 73 and 85% in total respectively. GC-FID analysis of the solutions produced indicate that a limited impact on the organics' concentration, proving the relative selectivity of CuO toward S-compounds decomposition. Copper oxide, is hence a very promising material both for organosulfur compounds decomposition and sulfide absorption, and potentially also manganese and molybdenum.

Note that exposing HTL water phases (HTL-WP) to various materials at room temperature and atmospheric pressure proved that the sorption of organosulfur compounds on the materials have in some cases a non-negligible impact. Noticeably, CuO&MoOₓ/AC and AC can ad(b)sorb from 20% to 50% of some compounds such as 2-Ethyl-thiophene, DMTS or DMDS. In the case of MeSH, a severe effect of CuO&MoOₓ/AC was observed at RT with most of the thiol being sorbed, MnO&CuO or AC absorbing ca. 20% of the MeSH. In other words, the fact that some compounds stable in HTG conditions in the presence of a material might ad(b)sorb on the trap upon cooling cannot be excluded in these tests.

Figure 4 shows the concentration (mgS.L-1) of the main organosulfur compounds identified by GC-SCD on the Spirulina HTL water phases exposed to HTG conditions with various sulfur traps. These samples correspond to the streams after reactor (3) in Figure 1. All organosulfur compounds for Ru/AC indicated here originate from sample cross contamination.

Overall, these results pave the way for the use of optimized sulfur traps that protects the Ru/AC gasification catalyst from poisoning (sulphidation) by organosulfur compounds. CuO was identified as an active phase for desulfurization of a stream, and MnO / MoOx, too. ZnO proved to be an efficient material for sulfide absorption but suffers from severe sintering in the conditions studied, which might alter its performance on the long term. Interestingly, iron in activated carbon showed to affect the composition of organosulfur compounds, a property that could be used to promote the optimized sulfur trap. All in all, these results allow to draw the lines of the strategy to be followed for sulfur trap optimization, that will be based on carbon-bound material transition metals. Several metal oxides (Cu, Fe, Mn and Zn) have been identified in terms of a suitable stability and performance for continuous sulfide and organosulfur compounds removal from the continuous process stream.

## Claims

1. A process for the catalytic supercritical water gasification of wet biomass and/or wastes, comprising the steps of:
a) pressurizing and heating a pumpable water-based slurry of the biomass and/or wastes and optionally other additives to supercritical water conditions, T> 374°C, P>22.1 MPa, and removing phase separated salts and/or solid particles via a brine extraction line in order to produce a desalinated process stream;
b) bringing the desalinated process stream under supercritical water conditions, T> 374°C, P>22.1 MPa, into contact with a first sulfur trap; said first sulfur trap being equipped with a first trap material comprising metal oxide based material in order to reduce the sulfides content of the desalinated process stream;
c) bringing the desalinated process stream under supercritical water conditions, T> 374°C, P>22.1 MPa, into contact with a second sulfur trap; said second sulfur trap being equipped with a second trap material comprising material based on metal chalcogenide (MX_{y}, X=O,S,Se,Te) and/or on hybrid carbon metal chalcogenide (MX_{y}:C, X= O,S,Se,Te) and/or on hybrid metal-carbon materials (M:C) in order to reduce the concentration of the organosulfur compounds of the desalinated process stream; wherein step c) either follows step b) or is executed prior to step b);
d) bringing the desalinated and desulphurized process stream into a hydrothermal gasification catalytic reactor in order to generate a methane-containing process stream;
e) cooling the methane-containing process gas stream to a temperature above the temperature for methane hydrate formation; and
f) depressurizing the cooled methane-containing process gas stream and separating the gaseous phase from the liquid phase.

2. The process according to claim 1, wherein
the first sulfur trap and/or the second sulfur trap are realized by injection of the respective trap materials in the step of pressurizing and heating a pumpable water-based slurry of the biomass and/or wastes thereby removing sulfur content via the brine extraction line.

3. The process according to claim 1 or 2, wherein at least a third sulfur trap is provided comprising third trap material in order to reduce the sulfide content and/or to reduce the concentration of the organosulfur compounds of the desalinated process stream.

4. The process according to any of the preceding claims, wherein the first trap material is ZnO-based, the second trap material is Fe-based and the third trap material is CuO-based.

5. The process according to any of the preceding claims, wherein the trap materials are mixed in a vessel and/or are present in different vessels and/or are present in the hydrothermal gasification catalytic reactor comprising also catalytic material for the gasification.

6. The process according to any of the preceding claims, wherein the trap materials are filled in the vessel in alternating layers.

7. The process according to any of the preceding claims wherein the hydrothermal gasification catalytic reactor is designed as fluidized bed reactor or as catalytically coated plate reactor or as fixed bed type reactor.

8. The process according to any of the preceding claims wherein an in situ regeneration of the said first trap material and/or said second trap material is performed by injecting a flow of an oxidant fluid, preferably under mild oxidation conditions.

9. The process according to any of the preceding claims, wherein said additive is a metal or metal oxide with affinity for reduced sulfur in the ionic or powder form to allow reduced sulfur removal in the salt separation.

10. The process according to any of the preceding claims, wherein the first and/or second trap material are metal chalcogenide (MX_{y}, X=O,S,Se,Te) and/or hybrid carbon metal chalcogenide (MXy:C, X= O,S,Se,Te) and/or hybrid metal-carbon materials (M:C).

11. The process according to any of the preceding claims, wherein the first and/or second trap material are prepared from the carbonization or pyrolysis of a carbon and/or a carbon source mixed with a metal source and/or metal/metal chalcogenide, wherein carbon preferably serves as a binder allowing a high porosity stable under supercritical water conditions.

12. The process according to any of the preceding claims, wherein the first and/or the second trap material is a chalcogenide, preferably in the form of oxide or sulfide.

13. The process according to any of the preceding claims, wherein at least one metal or metal chalcogenide is a transition metal and lanthanide, preferably Cr, Mn, Fe, Co, Ni, Cu, Zn, Mo, Ru, Rh, Pd, Ag, W, Re, Ir, Pt, Au, Ce, La more preferably Cr, Mn, Fe, Co, Ni, Cu, Zn, Mo, W, Ce and even more preferably Mn, Mo, Fe, Co, Cu, Zn.

14. The process according to any of the preceding claims, wherein the load of the active metal phase in the first and/or the second trap material is greater than 5wt%, preferably more than 30wt%, and even more preferably above 60wt%.
